# EUROPÄISCHE PATENTSCHRIFT

(11) **EP 3 536 604 B1**
(45) Veröffentlichungstag und Bekanntmachung des Hinweises auf die Patenterteilung: **18.05.2022**
(21) Anmeldenummer: 19160266.3
(22) Anmeldetag: 01.03.2019
(51) Int. Cl.: B64C 1/20

(54) **FRACHTDECK EINES FLUGZEUGS UND VERFAHREN ZUR HERSTELLUNG EINES BODENMODULS**
CARGO DECK OF AN AIRCRAFT AND METHOD FOR PRODUCING A FLOOR MODULE
PONT CARGO D'UN AVION ET PROCÉDÉ DE FABRICATION D'UN MODULE DE PLANCHER

(30) Priorität: 07.03.2018 DE 102018105278; 16.04.2018 DE 102018108950
(43) Veröffentlichungstag der Anmeldung: 11.09.2019
(60) Teilanmeldung: 21208543.5
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Würmser, Julian

(56) Entgegenhaltungen:
- WO-A1-2005/012085
- WO-A1-2016/150891
- DE-A1-102010 035 787
- DE-B3-102008 060 550
- US-A1- 2012 286 092
- US-A1- 2013 340 364
- US-B2- 7 867 928
- F. C. Campbell: "Liquid Molding: You Get a Good Preform and Tool...You Get a Good Part", MANUFACTURING PROCESSES FOR ADVANCED COMPOSITES, 1. Januar 2004 (2004-01-01), XP055604790, GB ISBN: 978-1-85617-415-2 Gefunden im Internet: URL:https://pdf.sciencedirectassets.com/27 5067/3-s2.0-B9781856174152X5000X/3-s2.0-B9 781856174152500101/main.pdf?X-Amz-Security -Token=AgoJb3JpZ2luX2VjEE0aCXVzLWVhc3QtMSJ GMEQCIDxY1Cc6EMuQEMbhPiOA46ReneCQn1wUkMSnK P0edBVwAiAzmyVhEHfGa4iWXi8opf38vO0iik%2Bd4 6coiell%2BX3ITSrjAwim%2F%2F%2F%2F%2F%2F%2F %2F%2F%2F8 [gefunden am 2019-07-11]

## Beschreibung

Die Erfindung betrifft ein Frachtdeck eines Flugzeugs.

Ladung, die durch eine Tür in den Frachtraum eines Flugzeugs eingebracht wird, muss in diesem Frachtraum weiterbefördert und im Frachtraum gesichert werden. Der Boden eines solchen Frachtraumes, der Teil des Frachtdecks ist, ist vorzugsweise modular aufgebaut, wie dies beispielsweise aus der EP 1 646 556 B1 bekannt ist.

Ein wesentliches Problem bei der Konstruktion eines solchen Frachtraumbodens besteht aus den gegensätzlichen Forderungen nach großer Stabilität und geringem Gewicht. Darüber hinaus dürfen weder die einzelnen Bauelemente noch der Einbau derselben allzu aufwendig sein, da dies die Kosten erhöht.

Weiterhin soll der Frachtraumboden wasserdicht sowie feuerfest sein und ein Eindringen von Flüssigkeit, beispielsweise in die Bilge, verhindern.

Sowohl für die Herstellung wie auch für die Montage von Frachtraumböden gilt, dass diese möglichst einfach sein soll.

In US 7 867 928 B2 wird ein Sandwichaufbau eines Bodenmoduls offenbart. Der Sandwichaufbau sieht einen kernfreien Randbereich, der keinen Schaumstoff- und/oder Strukturkern offenbart vor. Hinsichtlich des Zusammenfügens mehrerer Bodenmodule wird lediglich auf die Verwendung von Befestigungselementen abgestellt.

In DE 10 2010 035787 A1 wird ein Flächenelement eines Flugzeugfrachtraums offenbart, wobei auch dieses Flächenelement abschnittweise einen kernfreien Randbereich aufweisen kann. Das Flächenelement weist eine Verbindungseinrichtung zur Verbindung mit einem ersten Ende einer Stützstange auf, wobei das zweite Ende der Stützstange an einem Spant einer Flugzeugstruktur befestigt ist.

Aus WO 2016/150891 A1 ist ein Bodenmodul für einen Flugzeugfrachtraum bekannt, wobei das Deckelelement des Bodenmoduls als einheitliches Flächenelement ausgebildet ist, welches Montagebereiche aufweist, in denen Frachthandling-Systeme montierbar sind und in denen das Deckelelement auf ein Niveau eines Bodenelementes des Bodenmoduls abgesenkt ist.

DE 10 2008 060550 B3 beschreibt im Wesentlichen eine Anordnung zur Verlegung von elektrischen Kabeln im Fußbodenbereich eines Flugzeuges. Zu diesem Zweck wird eine Fußbodenplatte verwendet, die nutförmige Ausnehmungen aufweist. In den nutförmigen Ausnehmungen sind längliche Strangpressprofile angeordnet und in der Fußbodenplatte integriert. Die Fußbodenplatte ist als ein aus einer Wabenstruktur mit zwei äußeren Deckschichten bestehendes Sandwichbauteil ausgebildet. Das Stranpressprofil ist in der nutförmigen Ausnehmung der Wabenstruktur derart einlaminiert, dass der Boden eines Schubkastens auf der unteren Deckschicht der Wabenstruktur aufliegt und mit dieser verklebt ist. Die Zwischenräume zwischen den äußeren Seitenwänden des Strangpressprofils und den inneren Seitenwänden der nutförmigen Ausnehmung sind mit Kernfüllmasse und/oder Klebstoff aufgefüllt.

Auch US 2013/340364 A1 betrifft eine Bodenplatte mit integriertem Kabelkanal. Der Grundkörper der Bodenplatte ist in Form eines Sandwichbauteils mit zwei Wabenstrukturen ausgeführt, wobei sich eine erste Wabenstruktur von einem linken Rand des Grundkörpers bis zu einer linken Seite des Kabelkanals erstreckt. Die zweite Seite der Wabenstruktur erstreckt sich von einem rechten Rand des Grundkörpers bis zu einer rechten Seite des Kabelkanals, sodass der Kabelkanal zwischen den beiden Wabenstrukturen angeordnet ist.

Der Erfindung liegt die Aufgabe zu Grunde, ein Frachtdeck mit Bodenmodulen eines Flugzeugs aufzuzeigen, das die eingangs beschriebenen Probleme ausräumt. Insbesondere soll ein Frachtdeck beschrieben werden, das einfach und hoch funktional bzw. effizient ist. Das Frachtdeck soll bei geringem Gewicht eine hohe Stabilität und Wasserfestigkeit bzw. Wasserundurchlässigkeit haben. Weiterhin ist in vielen Anwendungsfällen eine Gasdichtigkeit erforderlich, so dass im Fall eines Feuers Löschgas, z.B. Halon, in bestimmte Bereiche eingeleitet werden kann, ohne dass dies entweicht. Auf keinen Fall darf das Löschgas aus dem Frachtraum in den Passagierraum und/oder das Cockpit gelangen. Allgemein sollen die genannten Eigenschaften gepaart sein mit geringen Herstellungs- und Einbaukosten.

Die Aufgabe wird durch ein Frachtdeck nach Anspruch 1 gelöst.

Vorteilhafte Ausführungsformen der Erfindung sind in den abhängigen Ansprüchen definiert.

Ein Kern der vorliegenden Erfindung besteht also darin, Bodenmodule als Faserverbundwerkstoffe herzustellen, wobei diese nebeneinander angeordnet eine (im Wesentlichen) wasserundurchlässige, (im Wesentlichen) gasundurchlässige und begehbare Oberfläche bilden. Die wasser- und/oder gasundurchlässige Oberfläche kann dadurch erzielt werden, dass die Bodenmodule in Abschnitten, insbesondere dort, wo die Randbereiche vorgesehen sind, überlappen. Zusätzlich ist ein Dichtband vorgesehen, das Unebenheiten ausgleicht. Das Dichtband kann aus Silikonband bestehen.

In einer Ausführungsform hat das Dichtband eine Dicke von ca. 1 bis 5 mm, insbesondere von ca. 2,5 mm. Das Dichtband kann eine Breite von ca. 1 bis 4 cm, vorzugsweise von ca. 2 cm, haben.

Eine entsprechende Breite und Dicke reicht aus, um eine effiziente Abdichtung der Bodenmodule gegeneinander und/oder gegenüber Elementen, auf denen diese abgestützt sind, zu bewerkstelligen.

In einer Ausführungsform ist das Dichtband vor dem Einlegen der Bodenmodule in das Frachtdeck, insbesondere an den Bodenmodulen, vormontiert. Hierfür kann das Dichtband eine Klebeschicht umfassen, die ein Verkleben des Dichtbands mit mindestens einem der Bodenmodule insbesondere im Randbereich ermöglicht. Das Dichtband kann abschnittsweise mit einem Bodenmodul verklebt werden oder am gesamten umlaufenden Rand angebracht sein.

Der Kern kann, wie bereits erläutert, entweder aus Schaumstoff oder aus Strukturelementen hergestellt sein. Als Strukturelemente bieten sich Waben- oder andere Vieleckformen an, die im Gebiet der Herstellungsverfahren von faserverstärkten Werkstoffen bekannt sind. Der Kern ist damit aus deutlich leichterem Material hergestellt als die Deckschichten. Es ergibt sich im Wesentlichen eine Sandwichstruktur, wobei jedoch die Deckschichten in den Randbereichen miteinander verklebt sind. Dies führt zu einem extrem steifen und stabilen Bodenmodul. Rein exemplarisch wird hinsichtlich eines Beispiels für einen Strukturkern auf die bekannte Wabenstruktur verwiesen. Der Kern zumindest eines Bodenmoduls kann Aussparungen umfassen, in die Inserts zur Aufnahme von Transportkugeln eingebracht sind. Vorzugsweise haben die Aussparungen einen Durchmesser und/oder eine Seitenlänge von mindestens ca. 2 cm, insbesondere von mindestens ca. 5 cm. Entsprechende Aussparungen können eine Kreis-, eine Ellipsen- oder eine rechtwinklige Form haben.

Das Vorsehen von Aussparungen ermöglicht es, Funktionselemente teilweise innerhalb des jeweiligen Bodenmoduls vorzusehen. Die Inserts erlauben ein Austauschen dieser Funktionselemente und vermeiden, dass die Aussparungen zu einer strukturellen Schwächung des jeweiligen Bodenmoduls führen. Die Inserts können aus einem Kunststoff und/oder einer Metalllegierung, beispielsweise Aluminium, hergestellt werden. Erfindungsgemäß ist es auch denkbar, auch die Inserts als Faserverbundwerkstoff oder einem Kunststoff herzustellen.

Auch eine integrierte Bauweise unter Nutzung der Bodenschicht und der Deckschickt, welche zu einem monolithischen Bauzustand zusammengeführt wurden, ist erfindungsgemäß umsetzbar. In dieser Ausführungsform können die Deckschichten, z.B. Boden- (unten) und Decklagen (oben) zusammenführt werden (z.B. durch eine lokale Entfernung des Kerns) und einen ca. 3 - 4 mm dicken monolithischen Körper mit einer Fläche von ca. 5 cm Durchmesser bilden. Die Aufnahme für das Kugelelement kann mittels eines abrasiven Verfahrens, z.B. durch Ausfräsen oder Ausschneiden, geschaffen werden. Dieses Herstellungsverfahren ist effizient und kostengünstig.

Zumindest eine der Transportkugeln kann drehbeweglich in einem Gehäuse gelagert sein, das sich in eines der Inserts einbringen lässt. Vorzugsweise verfügt das Gehäuse über eine Raste, so dass eine Rastverbindung zu dem Insert hergestellt werden kann. Auch aufgrund der Rastverbindung wird ein sicheres und effizientes Betreiben der Transportkugel gewährleistet.

Allgemein sei darauf hingewiesen, dass entsprechende Transportkugeln in diesem Fachbereich bekannt sind, um schwere Lasten, beispielsweise Container und/oder Frachtpaletten, auf dem Frachtdeck zu transportieren.

Erfindungsgemäß werden entsprechende Transportkugeln in die Bodenmodule derart integriert, dass ein nachträgliches Ausrüsten des Frachtdecks mit Kugelmatten ("ball mat") oder Transportrollen unnötig ist. Hierdurch kann weiteres Gewicht eingespart werden. Das Bodenmodul selbst kann hierbei aus mehreren Einzelkomponenten aufgebaut sein und z.B. aus einem unteren Modul mit integrierten Drainagewannen und einem oberen Kugelmattenboden bestehen. Das untere und/oder das obere Modul kann in der beschriebenen Weise hergestellt werden. Eine Teilbarkeit kann hier aus Fertigungs-, Montage- wie auch Wartungsgründen sinnvoll sein, um z.B. das Reinigen der Drainagebereiche zu ermöglichen.

Auch erleichtert das Anbringen der Transportkugeln vor dem Einbau der Bodenmodule in das Frachtdeck die Installation des Frachtdecks.

Die überlappenden Abschnitte der Randbereiche können jeweils einen unteren Randabschnitt eines ersten Bodenmoduls und einen oberen Randabschnitt eines zweiten Bodenmoduls umfassen. Der untere Randabschnitt weist vorzugsweise eine nach unten hin geneigte Oberseite und der obere Randabschnitt eine nach oben hin geneigte Unterseite auf. Die Neigung kann derart definiert sein, dass sie gegenüber einer Auflagefläche der Bodenmodule an/auf Lochschienen, Querträgern und/oder Längsträgern definiert ist.

Die Neigung führt dazu, dass das Ineinanderschieben der Module zu einem Abdichten der Module gegeneinander führt. Weiterhin ermöglicht die Neigung ein nachträgliches Ein- und Ausbauen eines Moduls, das zwischen einer Vielzahl von Modulen in einer Reihe angeordnet ist. Letztendlich kann das Modul gelöst, angehoben und aus dem Bereich unterhalb des oberen Randabschnitts herausgesogen werden. In entsprechender Weise kann das Modul nachträglich in eine Reihe eingefügt werden. In einer Ausführungsform liegen benachbarte Randabschnitte auf unterschiedlichen Ebenen, so dass eine Überlappung auch ohne die beschriebene Neigung möglich ist. Allgemein ist eine Dichtung in überlappenden Bereichen einer Stoßdichtung vorzuziehen.

Es ist erfindungsgemäß möglich, einzelne Randbereiche benachbarter Module miteinander zu verkleben. Vorzugsweise erfolgt eine lösbare Verbindung, insbesondere eine Schraubverbindung, zwischen den Randbereichen. Die erfindungsgemäßen Bodenmodule können hierfür Bohrungen in den Randbereichen aufweisen.

In einer Ausführungsform sind die überlappenden Abschnitte des Randbereichs zumindest teilweise vorzugsweise unter Verwendung einer Clip-Nut bzw. einer Schnappmutter miteinander verschraubt. Das Verschrauben ermöglicht die Wartung und Montage des Frachtdecks in einfacher Weise.

Die erste obere Deckschicht und/oder die zweite untere Deckschicht kann eine Vielzahl von Faserlagen umfassen. Die erste obere und die zweite untere Deckschicht können einen ähnlichen oder identischen Lagenaufbau haben. Bevorzugt unterscheidet sich die erste obere Deckschicht von der zweiten unteren Deckschicht in ihrem Lagenaufbau. So kann der Lagenaufbau hinsichtlich der auftretenden Belastungen ausgelegt und optimiert werden, z.B. mehr Fasern in den oberen Lagen, um die Gefahr von Beschädigungen durch die Beladung zu minimieren.

Die verwendeten Faserlagen können bidirektionale oder multidirektionale Gewebe sein. Die verwendeten Fasern können Kohlenstofffasern und/oder Aramidfasern und/oder Glasfasern umfassen.

In einer Ausführungsform hat zumindest eine der Deckschichten eine Dicke, die geringer ist als 3 mm, insbesondere geringer als 2 mm.

Die erste obere Deckschicht kann Faserlagen aus Glasfasern und aus Kohlefasern umfassen. In einer Ausführungsform wird eine ±45° Kohlenstofffaserlage von jeweils einer 0°/90°-Glasfaserlage umschlossen. Es kann sich also für die erste obere Deckschicht der folgende Aufbau ergeben:
- 0°/90° Glasfaserlage (ca. 0,16 mm);
- 0°/90° Glasfaserlage (ca. 0,26 mm);
- 0°/90° Glasfaserlage (ca. 0,26 mm).
- ±45° Kohlenstofffaserlage (ca. 0,32 mm);

Erfindungsgemäß kann die erste obere Deckschicht auch aus einem einheitlichen Material hergestellt werden, z.B. nur aus Glasfaser oder nur aus Kohlenfasern. Vorzugsweise handelt es sich bei den Glasfaserlagen um S2-Glasfaserlagen.

Der Aufbau der zweiten unteren Deckschicht kann folgendermaßen sein (von außen nach innen, auf den Kern zu):
- 0°/90° Glasfaserlage (ca. 0,16 mm);
- ±45° Kohlenstofffaserlage (ca. 0,32 mm).

Erfindungsgemäß kann die zweite untere Deckschicht auch aus einem einheitlichen Material hergestellt werden, z.B. nur aus Glasfaser oder nur aus Kohlenfasern.

Die genannten Dickenangaben sind besonders bevorzugt, wenn der Kern eine Dicke von 5 bis 12 mm, insbesondere von 7 bis 9 mm, hat. Insgesamt ergibt sich dann eine Bodenmoduldicke von weniger als 2 cm, insbesondere von weniger als 1,5 cm. Erfindungsgemäß können die Dickenangaben im Bereich von +/- 50 %, vorzugsweise im Bereich von +/- 30 Prozent variieren.

In einer Ausführungsform werden die Bodenmodule mit deutlich stärkeren Kernen ausgestattet. Dies kann beispielsweise dann notwendig sein, wenn Aufnahmen für Transportkugeln in den Bodenmodulen vorgesehen sind. Dies führt zu hohen punktuellen Lasten, die mit stärkeren Bodenmodulen aufgenommen werden können. Erfindungsgemäß hat der Kern in diesem Fall eine Dicke von 8 bis 30 mm, insbesondere von 10 bis 20 mm. Insgesamt kann sich dann eine Bodenmoduldicke von weniger als 4 cm, insbesondere von weniger als 2,5 cm, ergeben. Erfindungsgemäß können die Dickenangaben im Bereich von +/- 50 %, vorzugsweise im Bereich von +/- 30 Prozent variieren. Auch in dieser Ausführungsform kann es kernfreie Bereiche geben, die eine Dicke von weniger als 8 mm, insbesondere von weniger als 6 mm haben. Bevorzugt ist der kernfreie Bereich 3 bis 5 mm stark. Dieser kann auf Querträgern und/oder in Längsrichtung verlaufenden Profilen, z.B. U-Profilen zur Aufnahme von Rollenantriebseinheiten und/oder Riegeln, aufliegen.

In einer Ausführungsform befindet sich auf der Außenseite des Bodenmoduls (sowohl bei der ersten Deckschicht wie auch bei der zweiten Deckschicht) eine S2-Glasfaserlage. Dies verbessert die Brandsicherheit und verhindert eine schnelle Abnutzung des jeweiligen Moduls (hohe Schlagfestigkeit).

Mindestens eines der Bodenmodule kann eine lokale Lagenerhöhung zur Bildung des Randbereichs und/oder eines Auflageabschnitts und/oder zur Bildung einer der Aufnahmen für ein Funktionselement, insbesondere die Transportkugeln, und/oder zur Bildung einer Drainagewanne umfassen.

Die Erhöhung der Lagen führt zu einer erhöhten Stabilität in dem jeweiligen Bereich. In einer Ausführungsform umfassen die Randbereiche zusätzliche Lagen aus Kohlenstoff- und/oder Aramid- und/oder Glasfasern.

Weiterhin kann an den Stellen, an denen Aussparungen beispielsweise zur Aufnahme von Funktionselementen vorgesehen sind, die Lagenanzahl erhöht werden. Auch ist es denkbar, in verschiedenen Bereichen oberhalb von Aussparungen entkernt die Lagenanzahl zu erhöhen und bei der Fertigung des jeweiligen Bodenmoduls derart viel Druck an diesen Stellen auszuüben, dass sich die erste und die zweite Deckschicht kontaktieren und beim Aushärten einen Stoffschluss bilden. Aufgrund der erhöhten Lagenzahl können entsprechende Bereiche als Fixierpunkte oder für andere Anwendungen verwendet werden. Letztendlich ist es möglich, beim Herstellen funktionelle Bereiche in den jeweiligen Bodenmodulen auszubilden, die beispielsweise als Zurrpunkte, zur Entwässerung, usw. verwendet werden.

Dies führt zu einer Gewichtsreduktion und erleichtert die Installation.

Das Bodenmodul kann an mindestens einem Rand einen nach oben gewölbten und/oder schräg nach oben laufenden Abschnitt zum Abdecken des Flugzeugrumpfes aufweisen. An einem Rand nur dann, wenn das Bodenmodul im Bereich der Flugzeugtür montiert ist. Ansonsten können diese gewölbten Abschnitte an beiden Seiten eines Bodenmoduls vorgesehen sein. Dadurch ergibt sich eine weitere Vereinfachung bei der Herstellung und der Montage der Gesamtanordnung. Darüber hinaus führt der gegenüber der planen Fläche des Deckelementes gewölbte Abschnitt zu einer Versteifung der Gesamtanordnung. Allgemein aber auch bei dieser konkreten Ausbildung des Bodenmoduls können zwei Kerne nebeneinander angeordnet werden, wobei im Bereich zwischen den Kernen ein kernfreier Bereich, z.B. für die Montage an einem Längsträger vorgesehen ist, an dem die Deckschichten unter Ausbildung eines Stoffschlusses verbunden sind.

Das Bodenmodul weist vorzugsweise in einigen Bereichen zwischen den Deckschichten Verbindungselemente auf. Dadurch wird eine erhöhte Steifigkeit der Gesamtanordnung bewirkt. Ein solches Verbindungselement kann beispielsweise Rohrhülsen umfassen, durch welche Befestigungsmittel, insbesondere Schrauben zur Befestigung von Frachthandling-Systemen, z.B. von Tie-Down-Elementen direkt mit Querträgern des Frachtraumes verbindbar sind. Hier werden also "zwei Fliegen mit einer Klappe geschlagen": Befestigung des Bodenmoduls, Ableitung von Zugkräften in die Flugzeugstruktur.

Das Bodenmodul ist vorzugsweise, wie bereits erläutert, als Hybrid-Verbundwerkstoffteil, z.B. mit Karbon- und/oder Glasfaserverstärkung ausgebildet. Damit kann eine angestrebte dreidimensionale Formgebung in einer aufheizbaren Pressform erfolgen, so dass eine besonders effiziente Herstellung des Bodenmoduls bei hoher Festigkeit und geringem Gewicht gewährleistet ist.

Nachfolgend werden mehrere Ausführungsbeispiele der Erfindung anhand von Abbildungen näher erläutert. Hierbei zeigen
- Fig. 1: eine perspektivische Ansicht zweier Bodenmodule, die zwischen zwei Längsträgern eines Flugzeugs eingelegt sind;
- Fig. 2: eine Frontansicht auf das vordere Bodenmodul zwischen den Längsträgern aus Fig. 1;
- Fig. 3: eine Draufsicht auf die Bodenmodule aus Fig. 1;
- Fig. 4: eine perspektivische Ansicht der beiden Bodenmodule und der beiden Längsträger aus Fig. 1, wobei die Bodenmodule nicht in den Längsträgern angeordnet sind;
- Fig. 5: einen Querschnitt durch einen der beiden Längsträger aus Fig. 1;
- Fig. 6: einen Querschnitt durch den Bereich der beiden Bodenmodule aus Fig. 1, in dem sich diese überlappen;
- Fig. 7: eine schematisch dargestellte Presse zur Herstellung von Bodenmodulen;
- Fig. 8: eine Draufsicht auf den Presstisch der Presse aus Fig. 7;
- Fig. 9: einen Schnitt durch ein Bodenmodul mit einem Insert;
- Fig. 10: einen Schnitt durch das Bodenmodul aus Fig. 9, wobei in das Insert ein Gehäuse mit einer Transportkugel eingerastet ist;
- Fig. 11: eine Detailansicht des Inserts aus Fig. 9;
- Fig. 12: das Insert aus Fig. 11 in einer Explosionsdarstellung;
- Fig. 13: eine erste Variante eines Bodenmoduls;
- Fig. 14: eine zweite Variante eines Bodenmoduls;
- Fig. 15: einen schematischen Schnitt durch den Randbereich eines Bodenmoduls;
- Fig. 16: einen schematischen Schnitt durch den Frachtraum eines Flugzeugs;
- Fig. 17: eine dritte Variante eines Bodenmoduls mit Drainagewanne;
- Fig. 18: eine Seitenansicht der dritten Variante gemäß Fig. 17;
- Fig. 19: eine Explosionszeichnung der Drainagewanne aus Fig. 18.

In der nachfolgenden Beschreibung werden für gleiche und gleichwirkende Teile dieselben Bezugsziffern verwendet.

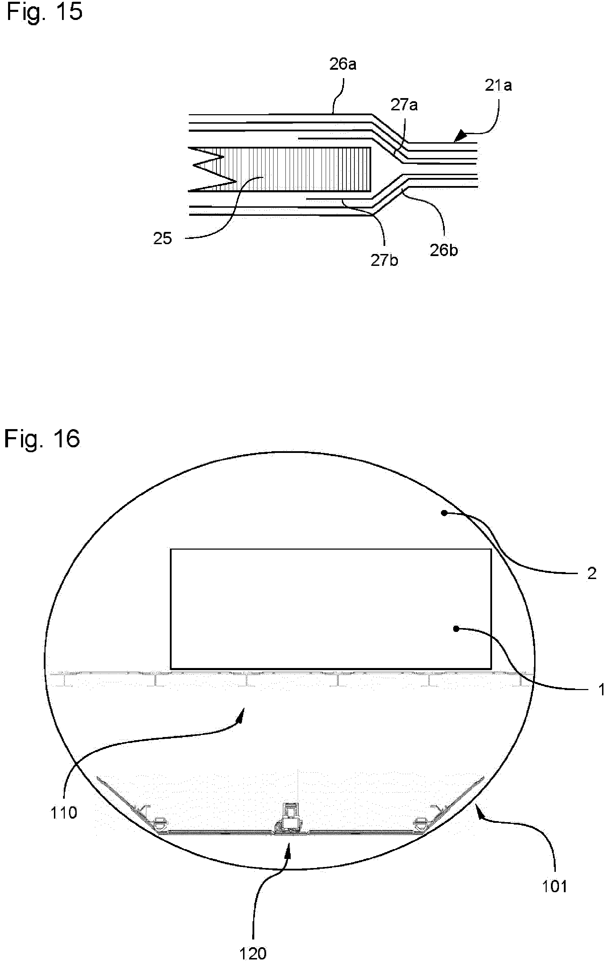

Die Fig. 16 zeigt einen schematischen Schnitt durch den Rumpf eines Flugzeugs. Anhand des Schnitts lässt es sich erkennen, dass Frachtflugzeuge üblicherweise zwei sich unterscheidende Frachtdecks, nämlich ein oberes Frachtdeck 110 sowie ein unteres Frachtdeck 120, aufweisen. In der Fig. 16 ist auf dem oberen Frachtdeck 110 innerhalb des Frachtraums 2 schematisch ein Container 1 angeordnet. Die Außenhaut 101 bildet die Begrenzung des Frachtraums 2.

Die im Folgenden beschriebenen Bodenmodule 20, 20' von erfindungsgemäßen Frachtdecks können als Flächenmodule sowohl für das obere Frachtdeck 110 sowie für das untere Frachtdeck 120 eingesetzt werden.

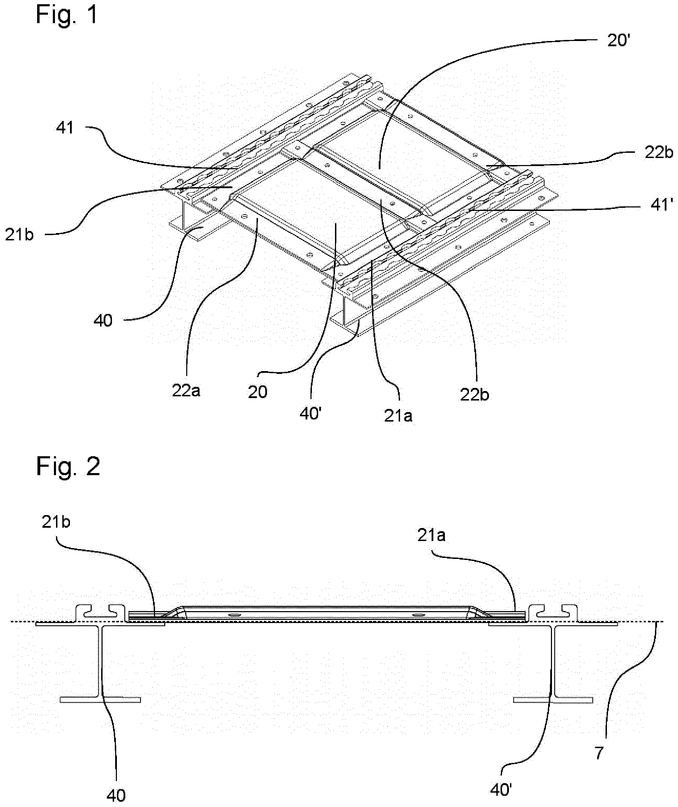

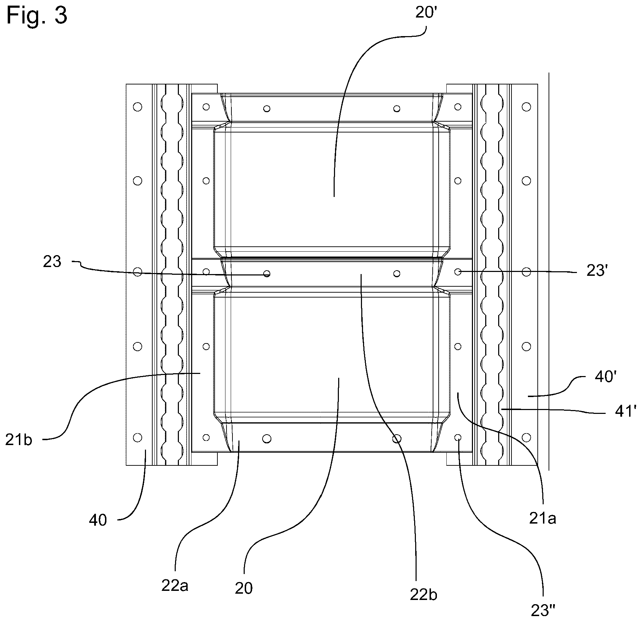

Fig. 1 zeigt schematisch Bodenmodule 20, 20', wie sie in das obere Frachtdeck 110 eingebaut werden können. Die Darstellungen in den Fig. 1 bis 6 sind stark schematisiert, um das Funktionsprinzip der Bodenmodule 20, 20' zu erläutern. Die Proportionen der einzelnen Elemente stimmen nicht zwangsweise überein.

In der Fig. 1 liegen die beiden Bodenmodule 20, 20' auf einem ersten Längsträger 40 und einem zweiten Längsträger 40' auf. Die Längsträger 40, 40' haben im Wesentlichen das Profil eines Doppel-T-Trägers. An der Oberseite der beiden Längsträger 40, 40' ist mittig jeweils eine sich ebenfalls in Längsrichtung erstreckende Lochschiene 41 bzw. 41' angebracht. Die Lochschiene kann integraler Bestandteil des jeweiligen Längsträgers 40 bzw. 40' sein. Alternativ wird die Lochschiene 41, 41' auf den jeweiligen Längsträger 40, 40' aufgeschraubt. Die Bodenmodule, genauer gesagt, die linken und rechten Randabschnitte 21a, 21b der beiden Bodenmodule 20, 20', liegen zwischen den Erhöhungen, die die Lochschienen 41, 41' ausbilden. Die Bodenmodule 20, 20' sind in einer Reihe hintereinander angeordnet. Das vordere Bodenmodul 20 liegt also vor dem hinteren Bodenmodul 20'. Insgesamt kann so ein geschlossenes und begehbares Frachtdeck ausgebildet werden.

An der Vorderseite des vorderen Bodenmoduls 20 befindet sich ein vorderer Randabschnitt 22a und an der hinteren Seite des vorderen Bodenmoduls 20 ein hinterer Randabschnitt 22b. Entsprechende Randabschnitte 22a, 22b sind auch an dem hinteren Bodenmodul 20' vorgesehen. Bereits anhand der Fig. 1 ist es ersichtlich, dass sich das vordere und das hintere Bodenmodul 20, 20' in dem hinteren Randabschnitt 22a des vorderen Bodenmoduls 20 bzw. in dem vorderen Randabschnitt 22a des hinteren Bodenmoduls 20' überlappen.

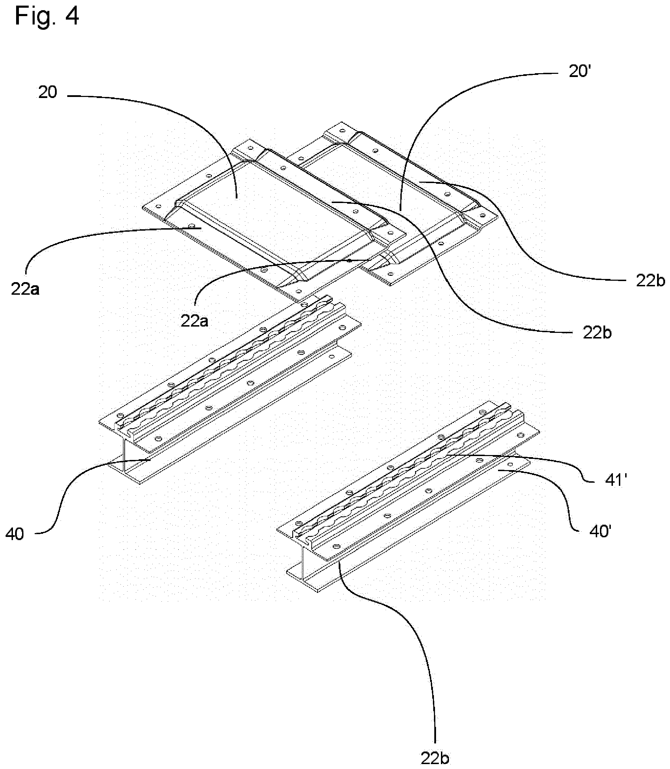

Die überlappenden vorderen und hinteren Randabschnitte 22a, 22b der beiden Bodenmodule 20, 20' sind in Fig. 4 bezeichnet.

Sowohl anhand der Fig. 1 sowie anhand der Fig. 2 und 4 ist es ersichtlich, dass die vorderen Randabschnitte 22a der beiden Bodenmodule 20, 20' eine Oberseite aufweisen, die nach unten hin - auf eine Auflageebene 7 der Bodenmodule 20, 20' zu - geneigt sind. Korrespondierend hierzu sind die hinteren Randabschnitte 22b der Bodenmodule 20, 20' nach oben geneigt, so dass, wie in der Fig. 1 gezeigt, eine passgenaue Verbindung zwischen den Bodenmodulen 20, 20' hergestellt werden kann. Die Auflageebene kann durch die Randabschnitte 21a, 21b definiert werden, die auf den Längsträgern 40, 40' aufliegen.

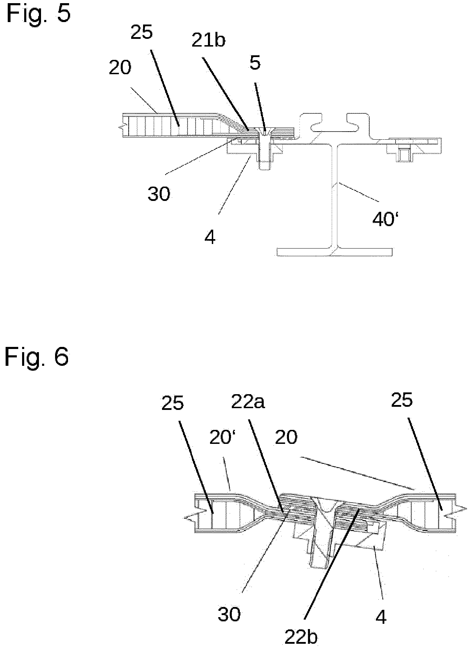

Die Fig. 6 zeigt einen Schnitt durch diesen überlappenden Bereich, wobei hier an dem vorderen Randabschnitt 22a des hinteren Bodenmoduls 20' eine Clip-Nut 4 vorgesehen ist, in die eine Schraube eingreift, die das vordere und das hintere Bodenmodul 20, 20', insbesondere den jeweiligen vorderen und hinteren Randabschnitt 22a, 22b, miteinander verbindet. Zwischen diesen Randabschnitten 22a, 22b befindet sich ein Dichtband 30, das die Verbindung abdichtet.

Die Bodenmodule 20, 20' sind im beschriebenen Ausführungsbeispiel rechteckig ausgebildet und weisen eine Vielzahl von Bohrungen 23, 23', 23" auf, die sowohl im linken wie im rechten Randabschnitt 21a, 21b sowie im vorderen wie im hinteren Randabschnitt 22a, 22b vorgesehen sind. Erfindungsgemäß können aber auch Bodenmodule 20, 20' mit speziell auf die Anforderungen des jeweiligen Flugzeugs abgestimmten Abmessungen hergestellt werden. Beispielsweise können beliebige im Wesentlichen viereckige oder dreieckige Flächen hergestellt werden, die besonders für die Abdeckung des Frachtdecks im enger werdenden Heckbereich vorteilhaft sind.

Die Bohrungen 23, 23' im linken und rechten Randabschnitt 21a, 21b ermöglichen ein Verschrauben der Bodenmodule 20, 20' mit dem Längsträger 40' bzw. 40. Die Bohrungen 23 im vorderen und hinteren Randabschnitt 22a, 22b gewährleisten das bereits erläuterte Verschrauben der Bodenmodule 20, 20' miteinander. Insgesamt ergibt sich so eine durchgehende Kette bzw. Reihe von Bodenmodulen, die das gesamte obere Frachtdeck 120 in Längsrichtung des Flugzeugs überspannt.

Fig. 5 zeigt einen Schnitt durch den Längsträger 40', wobei das Bodenmodul 20 mit diesem über eine Schraube 5 verschraubt ist. Auch in der Fig. 5 ist ein Dichtband 30 ersichtlich, das eine Dichtfunktion zwischen dem Bodenmodul 20 und dem Längsträger 40' übernimmt. Insgesamt kann mit den Dichtbändern 30, wie diese in den Fig. 5 und 6 gezeigt sind, das Frachtdeck derart abgedeckt werden, dass dieses wasserdicht und gegebenenfalls gasundurchlässig ist.

Anhand der Fig. 5, 6 und 15 ist es ersichtlich, dass die Bodenmodule 20, 20' als Faserverbundwerkstoffe hergestellt sind. Sie umfassen jeweils mittig einen Strukturkern 25, beispielsweise einen Wabenkern oder Schaum, der von Faserlagen, die die Deckschichten 26a, 26b bilden, umgeben ist. In den Randbereichen, beispielsweise in dem in Fig. 5 gezeigten rechten Randabschnitt 21b oder in den in Fig. 6 gezeigten vorderen und hinteren Randabschnitten 22a, 22b sind zusätzliche Faserlagen eingelegt. Diese sind in der Fig. 15 als Zusatzlagen 27a, 27b bezeichnet. Diese zusätzlichen Lagen führen dazu, dass die Bodenmodule 20, 20' in den Randbereichen eine erhöhte Festigkeit und Steifigkeit aufweisen, so dass die Randbereiche die bereits erläuterte Auflagefunktion (vergleiche hierzu auch Fig. 5) wahrnehmen können.

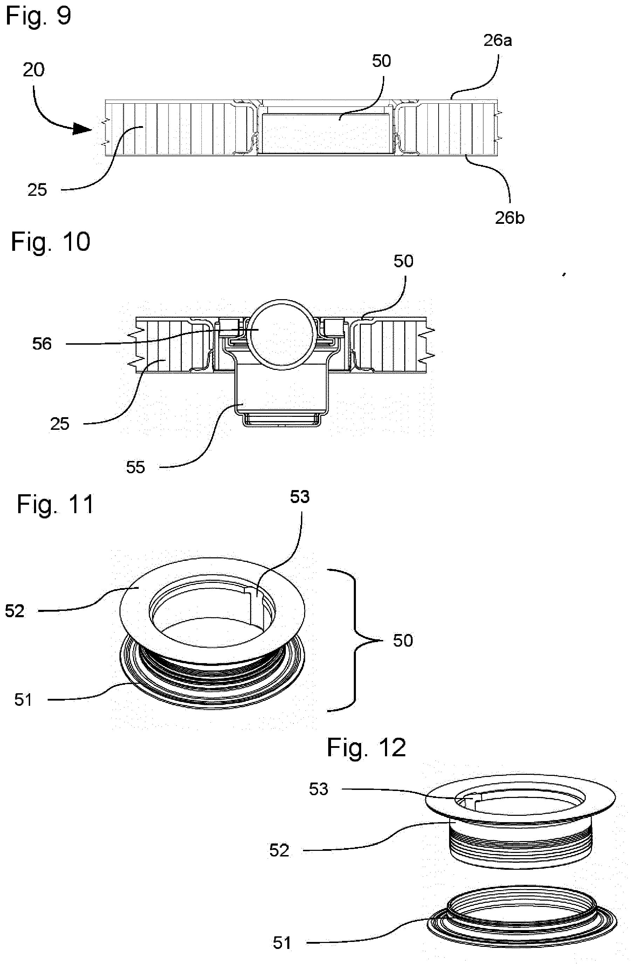

Erfindungsgemäß können die Bodenmodule 20, 20' auch mit integrierten Funktionseinheiten, beispielsweise einer Transportkugel 56 (vergleiche Fig. 10) ausgestattet sein. Die Fig. 9 bis 12 erläutern dies näher. Das Ausführungsbeispiel gemäß den Fig. 1 bis 4 weist keine entsprechenden Funktionseinheiten auf.

So können in den Bodenmodulen 20, 20', insbesondere in dem Bereich, in dem eigentlich der flächige Strukturkern 25 vorgesehen ist, Aussparungen angebracht werden, in die Inserts 50 integriert sind (vergleiche Fig. 9).

Die Inserts können dazu dienen, ein Gehäuse einer Transportkugel 56 zu halten (vergleiche Fig. 10). Erfindungsgemäß können die Inserts auch andere Funktionen wahrnehmen.

In einem Ausführungsbeispiel hat das Insert 50 eine Hinterschneidung 53 (vgl. Fig. 10 und 11), in die eine Raste des Gehäuses 55 einrastet, so dass die Transportkugel 56 sicher gehalten wird. Das Insert 50 kann, wie anhand der Fig. 12 ersichtlich, zweiteilig aus einem unteren Rahmenteil 51 und einem oberen Rahmenteil 52 hergestellt werden, die ineinandergreifen.

Ein entsprechendes Insert ist für den Herstellungsprozess der Bodenmodule 20, 20' besonders vorteilhaft.

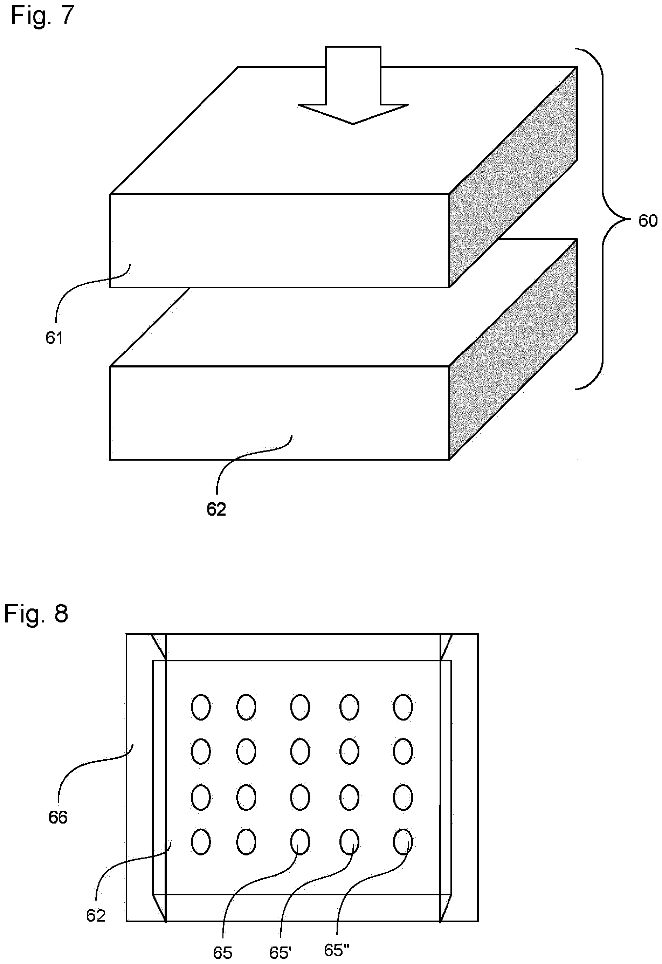

Eine entsprechende Herstellung erfolgt vorzugsweise in einer Presse 60, wie dies exemplarisch in Fig. 7 gezeigt ist. Die Presse 60 kann also einen Presstisch 62 und einen Pressstempel 61 umfassen, wobei der Pressstempel 61 mit Druck beaufschlagt auf den Presstisch 62 gedrückt werden kann. Zur Herstellung der Bodenmodule 20, 20' werden die Faserlagen, die die Deckschichten 26a, 26b bilden, sowie der Strukturkern 25 in die Presse 60 eingelegt, erhitzt und miteinander verpresst.

In einem Ausführungsbeispiel des Herstellungsverfahrens umfasst der Presstisch (bzw. die Pressform) 62 neben einem Rahmen 66 zur Herstellung der geneigten vorderen und hinteren Randabschnitte 22a, 22b Positionierungselemente 65, 65', 65", die über den Presstisch verteilt angeordnet sind. Zur Herstellung eines Bodenmoduls werden diese Positionierungselemente 65, 65', 65" mit oberen Rahmenteilen 52, wie diese in der Fig. 12 gezeigt sind, bestückt. Danach folgen Faserlagen, die vorzugsweise Aussparungen in den Bereichen der Positionierungselemente 65, 65', 65" haben. Auf die Faserlagen, die später die obere Deckschicht 26a bilden, wird ein ebenfalls mit entsprechenden Aussparungen versehener Strukturkern 25 gelegt. Auf den Strukturkern 25 kommen weitere Faserlagen zur Herstellung der unteren Deckschicht 26b. Abschließend werden die unteren Rahmenteile 51 eingebracht. Nach dem Erhitzen und Erwärmen dieses Lagenaufbaus ergibt sich ein Faserverbundwerkstoff mit Inserts 50, wie dies exemplarisch in der Fig. 9 gezeigt ist.

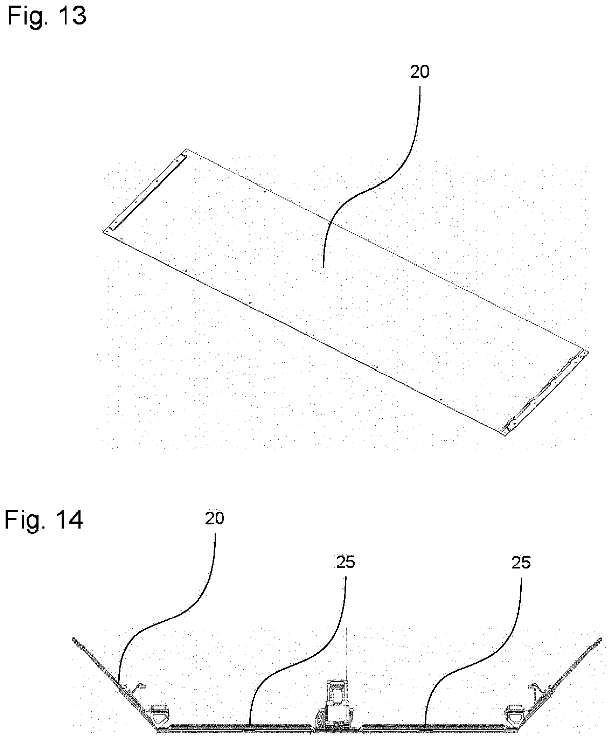

Es sind zahlreiche Varianten denkbar. So können, wie anhand der Fig. 13 ersichtlich, deutlich größere Bodenmodule 20 hergestellt werden. Auch ist es, wie anhand der Fig. 14 ersichtlich, möglich, mit einer geeigneten Presse ein Bodenmodul herzustellen, das geneigte Flügelabschnitte hat. Entsprechende Bodenmodule 20 sind besonders im unteren Frachtdeckbereich 120 von Vorteil. Die erfindungsgemäßen Bodenmodule 20, 20' können mit einem oder mehreren Strukturkernen 25 ausgestattet sein. Zwischen den Strukturkernen 25 können, wie aus der Fig. 16 ersichtlich, kernfreie Bereiche, z.B. mit erhöhter Lagenzahl, zur Befestigung der Bodenmodule 20, 20' an Strukturelementen des Flugzeugs und/oder zur Aufnahme von Funktionseinheiten, z.B. Rollenbahnen oder PDUs, vorgesehen sein.

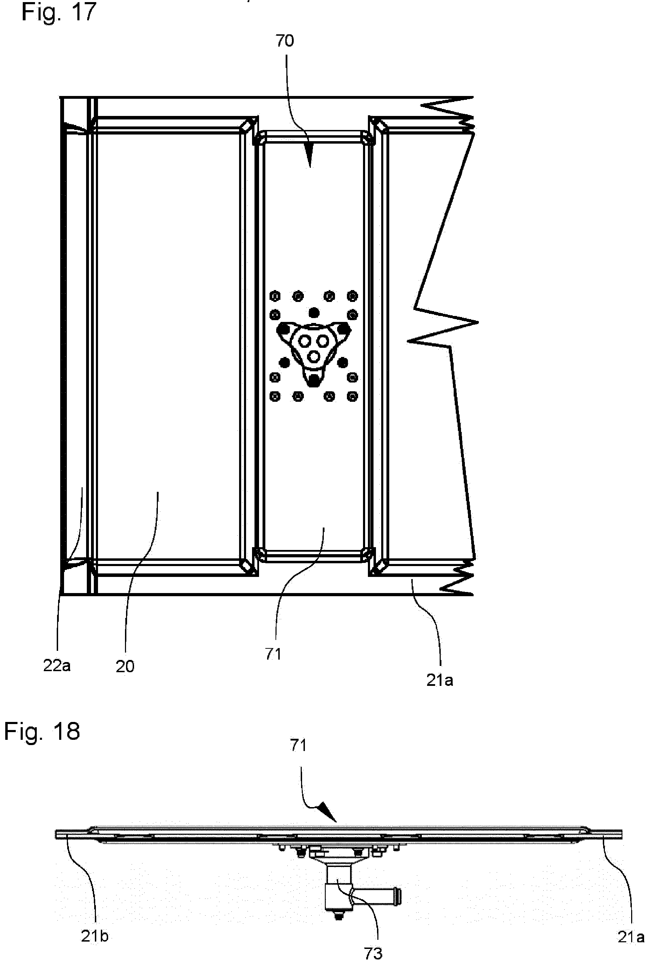

Die Fig. 17 zeigt eine weitere Variante eines Bodenmoduls 20. Dieses hat ähnlich wie die vorab beschriebenen Bodenmodule 20, 20' vordere und hintere geneigte Randabschnitte 22a, 22b. Ebenso sind linke und rechte Randabschnitte 21a, 21b vorgesehen. Insgesamt hat das Bodenmodul 20 gemäß der Fig. 17 eine rechtwinklige Form, wobei sich insgesamt eine längliche begehbare Oberfläche ergibt, die durch eine Drainagewanne 71 unterteilt ist. Die Drainagewanne 71 ist Teil eines Drainagesystems 70 zum Abführen von Flüssigkeiten. Die Drainagewanne 71 hat in der in Fig. 17 gezeigten Draufsicht eine im Wesentlichen rechtwinklige Abmessung und erstreckt sich beinahe über die gesamte Breite des Bodenmoduls 20, wobei die Randabschnitte 21a, 21b ausgenommen sind.

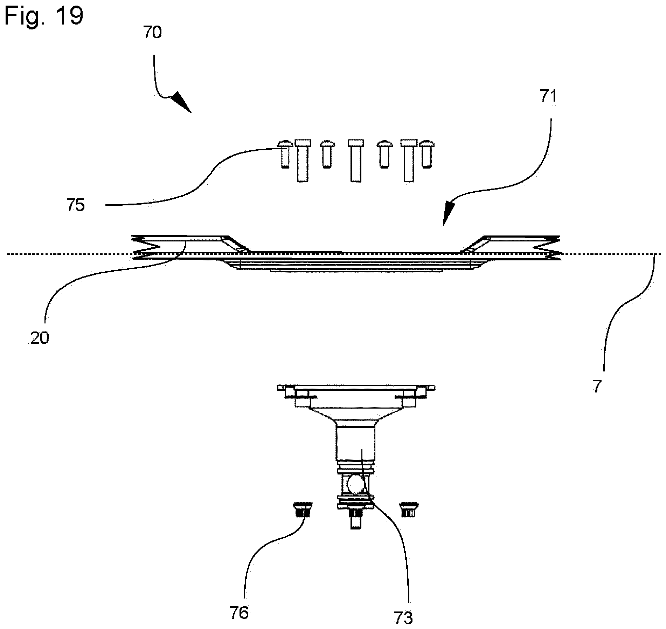

Mittig in der Drainagewanne 71 befindet sich eine Öffnung an deren Unterseite ein Abführstutzen 73 (vgl. Fig. 18 und 19) angebracht ist. Der Abführstutzen 73 ist mit einem Entwässerungssystem verbunden und gewährleistet, dass das Frachtdeck trotz der Entwässerungsfunktion weder Gase noch Flüssigkeiten in die Bilge einlässt. Die Drainagewanne 71 fällt zur Öffnung hin ab, so dass eine effiziente Entwässerung gewährleistet werden kann.

In einem Ausführungsbeispiel ist ein Sieb vorgesehen, um ein Verstopfen des Entwässerungssystems zu verhindern. In dem in den Fig. 17-19 gezeigten Ausführungsbeispiel ist der Abführstützen 73 mittels Drainageschrauben 75 und Drainagemuttern 76 an der Drainagewanne 71 des Bodenmoduls 20 angebracht. Theoretisch können weitere versteifende Flächenelemente an der Oberseite des Bodenmoduls 20 vorgesehen sein, um eine sichere Befestigung des Abführstutzens 73 zu gewährleisten.

Die Drainagewanne 71 kann als Teil des beschriebenen Herstellungsverfahrens derart ausgebildet werden, dass sich diese in einen Bereich unterhalb der Auflageebene 7 erstreckt. Die tiefste Stelle der Drainagewanne 71 kann von dieser Auflageebene 7 ca. mindestens 1,5 oder 2,5 cm beabstandet sein. In einem Ausführungsbeispiel wird die Drainagewanne 71 in einem kernfreien Bereich hergestellt, wobei je nach Anwendung eine erhöhte Anzahl von Faserlagen, beispielsweise Kohlenstofffaserlagen, vorgesehen ist. Die Struktur der Drainagewanne 71 kann mit einem geeigneten Werkzeug beim Pressen des Bodenmoduls 20 erzeugt werden. In diesem Pressschritt kann ein gleichzeitiges Aushärten des Faserverbundwerkstoffs erfolgen.

### Bezuaszeichenliste

- 1: Container
- 2: Frachtraum
- 4: Clip-Nut
- 5: Schraube
- 7: Auflageebene
- 20, 20': Bodenmodul
- 21a, 21b: linker und rechter Randabschnitt
- 22a, 22b: vorderer und hinterer Randabschnitt
- 23, 23', 23": Bohrungen
- 25: Strukturkern
- 26a, 26b: Deckschicht
- 27a, 27b: Zusatzlagen
- 30: Dichtband
- 40, 40': Längsträger
- 41, 41': Lochschiene
- 50: Insert
- 51: unteres Rahmenteil
- 52: oberes Rahmenteil
- 53: Hinterschneidung
- 55: Gehäuse
- 56: Transportkugel
- 57: Raste
- 60: Presse
- 61: Pressstempel
- 62: Presstisch
- 65, 65', 65": Positionierungselemente
- 66: Pressrahmen
- 70: Drainagesystem
- 71: Drainagewanne
- 73: Abführstutzen
- 75: Drainageschrauben
- 76: Drainagemuttern
- 101: Flugzeugaußenhaut
- 110: Oberes Frachtdeck
- 120: unteres Frachtdeck

## Patentansprüche

1. Frachtdeck eines Flugzeugs, umfassend eine Reihe von mindestens zwei nebeneinander angeordneten Bodenmodulen (20, 20') aus einem Faserverbundwerkstoff, wobei die Bodenmodule (20, 20') jeweils mindestens einen Kern (25) in Form eines Schaumstoff- und/oder Strukturkerns umfassen, der zwischen einer ersten oberen Deckschicht (26a) aus faserverstärktem Kunststoff und einer zweiten unteren Deckschicht (26b) aus faserverstärktem Kunststoff eingelagert ist, wobei die Bodenmodule (20, 20') jeweils einen kernfreien umlaufenden Randbereich zur Herstellung einer stoffschlüssigen Verbindung zwischen der ersten oberen Deckschicht und der zweiten unteren Deckschicht (26a, 26b) umfassen, wobei die Bodenmodule (20, 20') derart angeordnet sind, dass Abschnitte der kernfreien Randbereiche mit den stoffschlüssig verbundenen Deckschichten (26a, 26b) der nebeneinander angeordneten Bodenmodule (20, 20') einander überlappen, wobei zwischen den einander überlappenden Randbereichen der nebeneinander angeordneten Bodenmodule (20, 20') mindestens ein Dichtband (30) vorgesehen ist.

2. Frachtdeck nach Anspruch 1,
**dadurch gekennzeichnet, dass**
der Kern zumindest eines Bodenmoduls (20, 20') Aussparungen mit einem Durchmesser von mindestens 2 cm umfasst, in die Inserts (50) eingebracht sind, wobei in den Inserts (50) Transportkugeln (56) aufgenommen sind

3. Frachtdeck nach Anspruch 2,
**dadurch gekennzeichnet, dass**
zumindest eine der Transportkugeln (56) drehbeweglich in einem Gehäuse (55) gehaltert ist, das in das Insert (50) eingerastet ist.

4. Frachtdeck nach einem der vorhergehenden Ansprüche,
**dadurch gekennzeichnet, dass**
die überlappenden Abschnitte der Randbereiche einen unteren Randabschnitt (22a) eines ersten Bodenmoduls (20) und einen oberen Randabschnitt (22b) eines zweiten Bodenmoduls (20') umfassen, wobei der untere Randabschnitt (22a) eine nach unten hin geneigte Oberseite und der obere Randabschnitt (22b) eine nach oben hin geneigte Unterseite umfasst.

5. Frachtdeck nach einem der vorhergehenden Ansprüche,
**dadurch gekennzeichnet, dass**
die überlappenden Abschnitte der Randbereiche zumindest teilweise, vorzugsweise unter Verwendung einer Clip-Nut (4), miteinander verschraubt sind.

6. Frachtdeck nach einem der vorhergehenden Ansprüche,
**dadurch gekennzeichnet, dass**
die erste obere Deckschicht (26a) und/oder die zweite untere Deckschicht (26b) eine Vielzahl von Kohlenstoff- und/oder Aramid- und/oder Glasfaserlagen umfasst.

7. Frachtdeck nach einem der vorhergehenden Ansprüche, insbesondere nach Anspruch 6,
**dadurch gekennzeichnet, dass**
die erste obere Deckschicht (26a) und/oder die zweite untere Deckschicht (26b) eine Vielzahl von Faserlagen umfassen, wobei mindestens ein Bodenmodul (20, 20') eine lokale Erhöhung der Lagenanzahl (27a, 27b) zur Ausbildung des Randbereichs und/oder eines Auflageabschnitts und/oder zur Bildung einer/der Aufnahme einer/der Transportkugel (56) und/oder zur Bildung einer Drainagewanne (71) umfasst.

8. Frachtdeck nach einem der vorhergehenden Ansprüche,
**dadurch gekennzeichnet, dass**
mindestens ein Bodenmodul (20, 20') einen kernfreien Drainagebereich umfasst, wobei zumindest Abschnitte des kernfreien Drainagebereichs eine Drainagewanne (71) ausbilden, in der die erste obere Deckschicht (26a) unterhalb einer Auflageebene (7) liegt, wobei Abschnitte des kernfreien umlaufenden Randbereichs flächig zur Auflage auf Strukturelemente des Frachtdecks ausgebildet sind und besagte Auflageebene (7) definieren.

## Claims

1. A cargo deck of an aircraft, comprising a series of at least two floor modules (20, 20') arranged side by side and made of a fibre composite material, wherein the floor modules (20, 20') each comprise at least one core (25) in the form of a foam core and/or structure core, which is embedded between a first, upper cover layer (26a) of fibre-reinforced plastics and a second, lower cover layer (26b) of fibre-reinforced plastics, wherein the floor modules (20, 20') each comprise a core-free circumferential edge area for producing a substance-to-substance bond between the first, upper cover layer and the second, lower cover layer (26a, 26b), wherein the floor modules (20, 20') are arranged such that portions of the core-free edge areas overlap with the substance-to-substance bonded cover layers (26a, 26b) of the floor modules (20, 20') arranged side by side, wherein at least one sealing tape (30) is provided between the overlapping edge areas of the floor modules (20, 20') arranged side by side.

2. The cargo deck according to claim 1,
**characterized in that**
the core of at least one floor module (20, 20') comprises recesses having a diameter of at least 2 cm, into which inserts (50) are introduced, wherein transport balls (56) are accommodated in the inserts (50).

3. The cargo deck according to claim 2,
**characterized in that**
at least one of the transport balls (56) is supported in a housing (55) to be rotatable, which housing is snapped into the insert (50)

4. The cargo deck according to any one of the preceding claims,
**characterized in that**
the overlapping portions of the edge areas comprise a lower edge portion (22a) of a first floor module (20) and an upper edge portion (22b) of a second floor module (20'), wherein the lower edge portion (22a) comprises a downwardly inclined upper side and the upper edge portion (22b) comprises an upwardly inclined lower side.

5. The cargo deck according to any one of the preceding claims,
**characterized in that**
the overlapping portions of the edge area are at least in part screwed together preferably using a clip groove (4).

6. The cargo deck according to any one of the preceding claims,
**characterized in that**
the first, upper cover layer (26a) and/or the second, lower cover layer (26b) comprise/s a plurality of carbon fibre layers and/or aramid fibre layers and/or glass fibre layers.

7. The cargo deck according to any one of the preceding claims, in particular according to claim 6,
**characterized in that**
the first, upper cover layer (26a) and/or the second, lower cover layer (26b) comprise/s a plurality of fibre layers, wherein at least one floor module (20, 20') comprises a local increase of the layer number (27a, 27b) for forming the edge area and/or a contact portion and/or for forming an/the accommodation of a/the transport ball (56) and/or for forming a drainage tub (71).

8. The cargo deck according to any one of the preceding claims,
**characterized in that**
at least one floor module (20, 20') comprises a core-free drainage area, wherein at least portions of the core-free drainage area form a drainage tub (71) in which the first, upper cover layer (26a) rests below a contact plane (7), wherein portions of the core-free circumferential edge area are formed to be flat for resting upon structural elements of the cargo deck and define said contact plane (7).

## Revendications

1. Pont cargo d'un avion, comprenant une série d'au moins deux modules de fond (20, 20') disposés les uns à côté des autres, composés d'un matériau composite en fibres, sachant que les modules de fond (20, 20') comprennent respectivement au moins une âme (25) sous forme d'âme en mousse et/ou d'âme structurelle qui est intercalée entre une première couche de recouvrement supérieure (26a) en matière synthétique renforcée par fibres et une deuxième couche de recouvrement inférieure (26b) en matière synthétique renforcée par fibres, sachant que les modules de fond (20, 20') comprennent respectivement une zone de bord périphérique exempte d'âme destinée à réaliser une liaison par engagement de matière entre la première couche de recouvrement supérieure et la deuxième couche de recouvrement inférieure (26a, 26b), sachant que les modules de fond (20, 20') sont disposés de telle manière que des sections des zones de bord exemptes d'âme présentant les couches de recouvrement (26a, 26b) reliées par engagement de matière des modules de fond (20, 20') disposés les uns à côté des autres se chevauchent les unes les autres, sachant qu'au moins une bande d'étanchéité (30) est prévue entre les zones de bord se chevauchant les unes les autres des modules de fond (20, 20') disposés les uns à côté des autres.

2. Pont cargo selon la revendication 1,
**caractérisé en ce que**
l'âme d'au moins un module de fond (20, 20') comprend des évidements d'un diamètre d'au moins 2 cm dans lesquels des inserts (50) sont insérés, sachant que des billes de transport (56) sont logées dans les inserts (50).

3. Pont cargo selon la revendication 2,
**caractérisé en ce que**
au moins une des billes de transport (56) est maintenue de manière mobile en rotation dans un boîtier (55) qui est encliqueté dans l'insert (50).

4. Pont cargo selon l'une des revendications précédentes,
**caractérisé en ce que**
les sections se chevauchant des zones de bord comprennent une section de bord inférieure (22a) d'un premier module de fond (20) et une section de bord supérieure (22b) d'un deuxième module de fond (20'), sachant que la section de bord inférieure (22a) comprend une face supérieure inclinée vers le bas, et la section de bord supérieure (22b), une face inférieure inclinée vers le haut.

5. Pont cargo selon l'une des revendications précédentes,
**caractérisé en ce que**
les sections se chevauchant des zones de bord sont au moins en partie vissées les unes aux autres, de préférence moyennant une rainure à clip (4).

6. Pont cargo selon l'une des revendications précédentes,
**caractérisé en ce que**
la première couche de recouvrement supérieure (26a) et/ou la deuxième couche de recouvrement inférieure (26b) comprend une pluralité de nappes en carbone et/ou en aramide et/ou en fibres de verre.

7. Pont cargo selon l'une des revendications précédentes,
en particulier selon la revendication 6,
**caractérisé en ce que**
la première couche de recouvrement supérieure (26a) et/ou la deuxième couche de recouvrement inférieure (26b) comprennent une pluralité de nappes de fibres, sachant qu'au moins un module de fond (20, 20') comprend une hausse locale du nombre de nappes (27a, 27b) pour constituer la zone de bord et/ou une section de pose et/ou pour former un/le logement d'une/de la bille de transport (56) et/ou pour former une cuve de drainage (71).

8. Pont cargo selon l'une des revendications précédentes,
**caractérisé en ce que**
au moins un module de fond (20, 20') comprend une zone de drainage exempte d'âme, sachant qu'au moins des sections de la zone de drainage exempte d'âme constituent une cuve de drainage (71) dans laquelle la première couche de recouvrement supérieure (26a) est située sous un plan de pose (7), sachant que des sections de la zone de bord périphérique exempte d'âme sont constituées de manière surfacique pour être posées sur des éléments structurels du pont cargo et définissent ledit plan de pose (7).
